# EUROPEAN PATENT APPLICATION

(11) **EP 0 666 136 A1**
(43) Date of publication of application: **09.08.1995**
(21) Application number: 95300603.8
(22) Date of filing: 31.01.1995
(51) Int. Cl.: B23Q 11/00, B27C 3/06

(54) **A drilling device**

(30) Priority: 04.02.1994 GB 9402122
(71) Applicant: Black & Decker Inc., Newark Delaware 19711 (US)
(72) Inventor: Valsecchi, Giovanni, I-22040 Civate, (Como) (IT)
(74) Representative: Stagg, Diana Christine

(57) **Abstract**

A multiple hole drilling device comprising a base 1 for abutment against a workpiece and drive means 3 slidably mounted on the base 1 for driving a plurality of drill bits 5 through the base 1 into a workpiece, wherein the base 1 includes passageways 15,17 through which dust produced during drilling can be extracted.

## Description

This invention relates to drilling devices, and in particular to a drilling device which incorporates passage-ways for the extraction of dust produced during drilling.

A hand-held multiple hole drilling device which is particularly suitable for the drilling of dowel holes to enable two workpieces to be joined together by dowel joints is disclosed in our co-pending U.K. Patent Application No. 9402120.1.

In brief, this multiple hole drilling device comprises a base for abutment against a workpiece and drive means slidably mounted on the base for driving a plurality of rotating drill bits through the base into the workpiece. As a result of the drilling procedure, dust is produced and it is the aim of the present invention to provide a means for extracting this dust which is neat and convenient, yet reliable and efficient.

In accordance with the foregoing, the present invention provides a multiple hole drilling device comprising a base for abutment against a workpiece and drive means slidably mounted on the base for driving a plurality of drill bits through the base into a workpiece, wherein the base includes passageways through which dust produced during drilling can be extracted. Hence, if a suction device is arranged to communicate with the passageways in the base, dust produced during drilling can be readily removed from the vicinity of the drill bits.

Preferably the passageways extend from a collection port to the vicinity of each drill bit.

In a preferred embodiment, the passageways include a longitudinal duct and a plurality of branches leading from the longitudinal duct to the vicinity of the drill bits. More preferably, two parallel longitudinal ducts are provided straddling the drill bits, during use. By arranging the longitudinal ducts in this way, side branches therefrom can approach the drill bits from opposite sides, thereby achieving more efficient removal of dust from the vicinity of the drill bits.

The two longitudinal ducts preferably merge into the collection port.

The collection port is preferably adapted for attachment to a suction device. In this regard, a pipe of a suction device may be screwed onto the collection port, clamped onto the collection port, or attached in any other appropriate way.

The collection port is preferably formed in a moulded plastics plug which closes one end of the longitudinal duct or ducts. An end plug preferably seals the other end of each longitudinal duct, thereby ensuring that the vacuum applied by a suction device is applied only to the vicinity of the drill bits.

The base may define a surface for bearing against a workpiece during drilling of the workpiece. Further, the base preferably defines an opening for receiving an extension arm, the extension arm carrying a stud for engaging holes already drilled in a workpiece. By controlling the length of the extension arm and the position of the stud, accurate drilling of groups of drill holes relative to drill holes already drilled can be achieved. Such an arrangement is described in more detail in our U.K. Patent Application No. 9402121.9.

Dimples may be formed along the inside surface of the opening for engagement by resilient means mounted on the extension arm. In this way, the extension arm can be held extending by a chosen amount from the base of the drilling device.

The base is preferably formed by extrusion and cut to length. It may be, however, that additional holes will need to be formed in the extruded base to provide the branches from the longitudinal ducts to the area to be occupied by the drill bits. Although a drilling device according to the present invention is intended to be a hand-held readily portable device, the dust extraction passageways and other features thereof may also be applicable to non-hand-held drilling devices.

A specific embodiment of the present invention is now described, by way of example only, with reference to the accompanying drawings, in which:

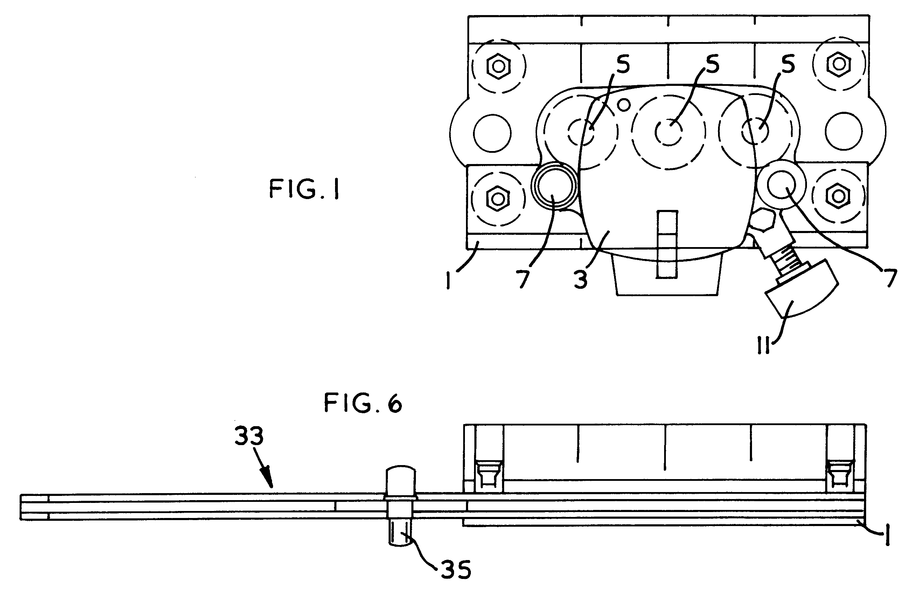

Figure 1 is a schematic plan view of a drilling device of the kind envisaged herein;
Figure 2 is a schematic sectional side view of a base incorporating a dust extraction system of the kind envisaged by the present invention;
Figure 3 is a schematic sectional plan view of Figure 2 taken in the direction A-A shown in Figure 2;
Figure 4 is a sectional side view of the base and dust extraction system shown in Figure 2 in the direction B-B shown in Figure 2;
Figure 5 is an end view of an end plug of the drilling device in the direction of Arrow C in Figure 3; and
Figure 6 is a schematic side view of a base of a drilling device according to the present invention incorporating an extension arm.

With reference to the drawings, a multiple hole drilling device of the kind envisaged herein comprises a base 1, a motor and gearbox 3 and a plurality of drill bits 5 driven by the motor and gearbox 3. The motor and gearbox 3 is mounted on two rods 7 attached to the base 1 so that the rotating drill bits 5 can be plunged through openings 9 in the base 1 and into a work-piece (not shown) as the motor and gearbox 3 moves down the rods 7. A knob 11 may be used to control the motion of the motor and gearbox 3 up and down the rods 7.

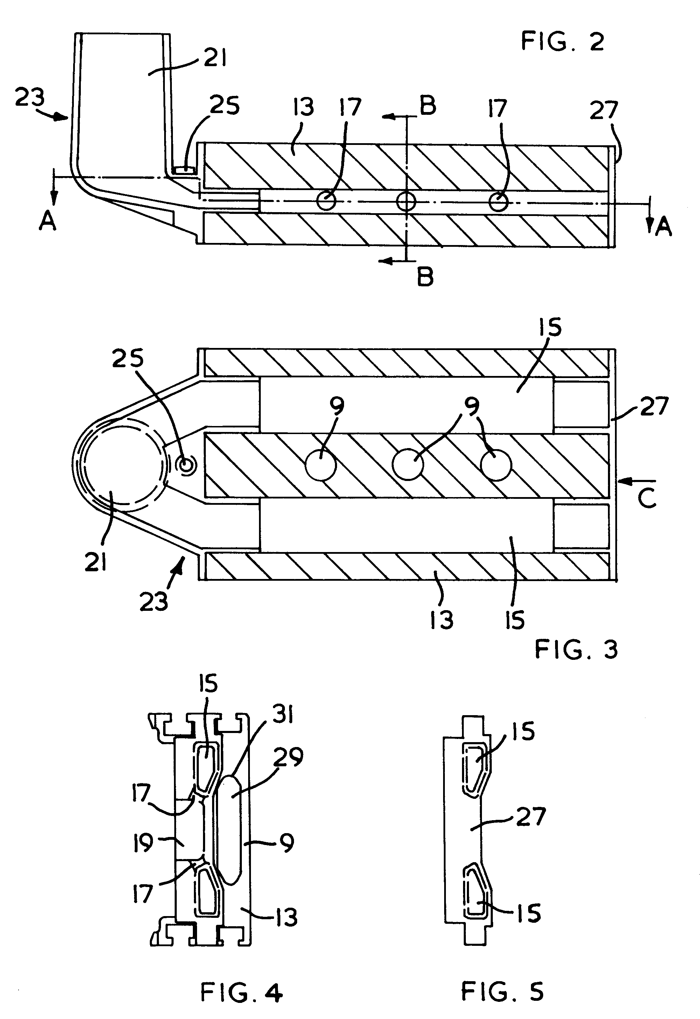

As will be seen from Figures 2-5, the base 1 according to the present invention comprises an extruded body 13 having two longitudinal ducts 15 straddling the three openings 9 through which the drill bits 5 pass during plunging into a workpiece. Branch passageways 17 extend from the longitudinal ducts 15 to recesses 19 above the openings 9, as shown in Figure 4. The recesses 19 are shaped to accommodate chucks (not shown) of the motor and gearbox 3 during plunging of the drill bits through the openings 9 into a workpiece.

As can be seen from Figure 3, the two longitudinal ducts 15 merge into a collection port 21 which is adapted for communication with a suction device (not shown) for removing dust produced during drilling from the recesses 19. The collection port 21 is formed in a moulded plastics plug 23 which closes one end of each of the longitudinal ducts 15, as shown in Figure 3. A screw or bolt 25 is shown securing the moulded plastics plug 23 to the body 13 of the base 1.

At the other end of the longitudinal ducts 15, an end plug 27 closes the ducts 15 so that any vacuum produced by the suction device in the base 1 is directed solely towards the vicinity of the drill bits, namely in the recesses 19 of the body 13 via the branch passageways 17.

As can be seen in Figure 4, a longitudinal opening 29 is provided through the body 13. An inside surface of this opening 29 has a plurality of dimples 31 formed therealong. The dimples 31 are positioned to receive resilient means formed on an extension arm 33 to retain the extension arm 33 in a chosen position relative to the base 1 of the drilling device (cf Figure 6 of the drawings). The extension arm 33 includes a stud 35 for engagement in a drill hole already formed in a workpiece. By fixing the position of the extension arm 33 relative to the base 1 using the dimples 31 and resilient means (not shown) and by fixing the position of the stud 35 along the extension arm 33, repeatable distances between groups of drill holes can be formed along a workpiece. As a result, more accurate drilling of dowel holes, for example, can be achieved. Equally, the dimples may be provided on the extension arm and the resilient means in the base, as described in our latter co-pending application mentioned above.

It will, of course, be understood that the present invention has been described purely by way of example, and the modifications of detail can be made within the scope of the invention.

## Claims

1. A multiple hole drilling device comprising a base for abutment against a workpiece and drive means slidably mounted on the base for driving a plurality of drill bits through the base into a workpiece, wherein the base includes passageways through which dust produced during drilling can be extracted.

2. A device as claimed in claim 1, wherein the passageways include a longitudinal duct and a plurality of branches leading from the longitudinal duct to the vicinity of the drill bits.

3. A device as claimed in claim 2, wherein two parallel longitudinal ducts are provided straddling the drill bits during use.

4. A device as claimed in any preceding claim, wherein the passageways extend from a collection port to the vicinity of each drill bit.

5. A device as claimed in claim 4 when dependent upon claim 3, wherein the two longitudinal ducts merge into the collection port.

6. A device as claimed in claim 4 or claim 5, wherein the collection port is adapted for attachment to a suction device.

7. A device as claimed in any one of claims 4 to 6 when dependent upon claim 2 or claim 3, wherein the collection port is formed in a moulded plastics plug which closes one end of the longitudinal duct or ducts.

8. A device as claimed in claim 7, wherein an end plug seals the other end of the longitudinal duct or ducts.

9. A device as claimed in any preceding claim, wherein the base defines a longitudinal opening for receiving an extension arm, the extension arm carrying a stud for engaging holes already drilled in a workpiece.

10. A device as claimed in claim 9, wherein dimples are formed along the inside surface of the longitudinal opening for engagement by resilient means mounted on the extension arm.

11. A device as claimed in any preceding claim, wherein the base is formed, at least in part, by extrusion.

12. A device as claimed in any preceding claim which is a hand-held multiple hole drilling device.
